# EUROPEAN PATENT SPECIFICATION

(11) **EP 1 326 152 B1**
(45) Date of publication and mention of the grant of the patent: **14.02.2007**
(21) Application number: 02029077.1
(22) Date of filing: 30.12.2002
(51) Int. Cl.: G05B 19/418, G05B 19/042, C03B 9/41

(54) **Timing control system for a hollow glassware production line**
Zeitsteuerungssystem für eine Hohlglass-Produktionslinie
Système de commande de temporisation pour une ligne de production d'objects en verre creux

(30) Priority: 08.01.2002 IT TO20020023
(43) Date of publication of application: 09.07.2003
(73) Proprietor: BOTTERO S.p.A., 12010 Cuneo (IT)
(72) Inventor: Carenini, Giovanni, 12089 Villanova Di Mondovi' (IT); La Carrubba, Giovanni, 12100 Cuneo (IT); Sesia, Carlo, 12100 Cuneo (IT); Borsarelli, Gianclaudio, 12100 Cuneo (IT)
(74) Representative: Jorio, Paolo

(56) References cited:
- EP-A- 0 603 011
- EP-A- 0 890 906
- EP-A- 1 184 754
- DE-A- 19 953 189
- GB-A- 2 097 555
- US-A- 4 152 134
- US-A- 5 812 392

## Description

The present invention relates to a timing control system for a hollow glassware production line.

As is known, a hollow glassware production line comprises a given number of sections (normally two to twenty, forming an I.S. machine) operating simultaneously to produce the same or more different articles. Each section comprises a large number of movable members (some common to all the sections, others forming part of a specific section) which are each operated by an electric or pneumatic actuator, and which must be synchronized with one another. Operation of the movable members of each section is therefore controlled by a timing control system on the basis of a production plan (or so-called "recipe"), which depends on the type of article being produced, the type of process used in each section, and the specific section in which the articles are produced.

Currently used timing control systems have a hierarchical architecture with intelligence distributed among the various levels. For example, a first solution comprises a supervisor, which processes the production plan and sends the relative data to a machine controller for controlling operation of the various machine sections; the machine controller is connected by a low-speed serial bus to a plurality of section control units; each section control unit is in turn connected to and controls operation of a plurality of valve control units over a respective high-speed serial bus; and each valve control unit is connected by a plurality of lines to as many controlled members (solenoid valves for controlling the pneumatic motors; section control pushbuttons; machine control pushbuttons; generic customer inputs and outputs). In other solutions, the machine controller is parallel to the section control units, which are connected to the valve control units as described above.

US-A-4 152 134 discloses a control system for an individual section glassware forming machine including a machine supervisory computer receiving timing pulses from a timing pulse generator and loading each individual section computer with a control program and data timing. Each individual section computer is associated to a respective section and generates control signals for the respective section in response to the control program and timing pulses from the timing pulse generator.

US-A-5 812 392 teaches a sequencer for electric valves used in a hollow glass manufacturing installation, wherein a command-control cabinet is connected to a distribution box through optical fibers; the distribution box converts the optical signals into electrical signals and communicates serially with an electronic box. The electronic box has no intelligent elements and consists of series/parallel and parallel/series converts multiplexers connected to a power block and to control panels.

GB-A-2 097 555 describes an electronically controlled irrigation system having a central processor unit connected to a plurality of slave units through a common signal bus providing control signals and power supply, wherein the solenoids connected to the slave units that are to be operated simultaneously should share the same codes or turned on in rapid succession.

The above architectures are fairly complex and call for a large number of cables for connecting the control units of different levels. At present, in fact, the valve control units are normally housed in cabinets from which the cables for connection to the section control units and the machine extend.

It is an object of the present invention to provide a timing control system designed to simplify and reduce the amount of wiring required.

According to the present invention, there is provided a hollow glassware production system, as defined in claim 1.

Some non-limiting embodiments of the invention will be described by way of example with reference to the accompanying drawings, wherein:
Figure 1 shows a block diagram of a hollow glassware production line;
Figure 2 shows a block diagram of a first embodiment of the control system according to the invention;
Figure 3 shows a block diagram of a second embodiment of the control system according to the invention;
Figure 4 shows a block diagram of a third embodiment of the control system according to the invention;
Figure 5 shows a block diagram of a fourth embodiment of the control system according to the invention.

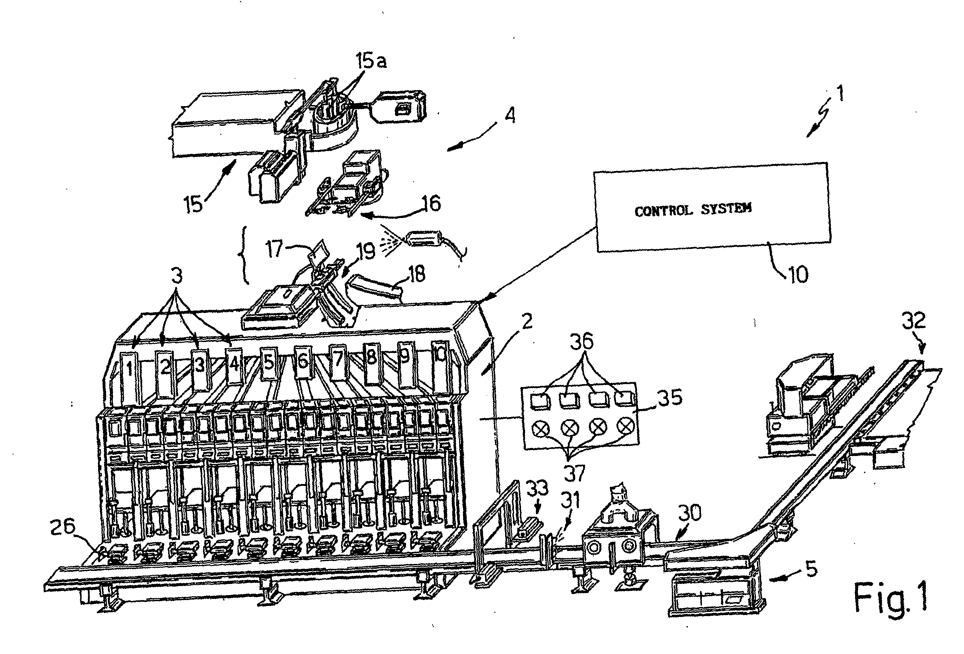

Number 1 in Figure 1 indicates a hollow glassware production system comprising a line 2 and a control system 10.

Line 2 is designed in known manner to simultaneously produce a plurality of articles, and roughly comprises:
- an I.S. machine defined by a plurality of parallel article molding sections 3;
- a glass gob forming and feed assembly 4; and
- an article take-away and inspection assembly 5.

Glass gob forming and feed assembly 4 roughly comprises a molten-glass feeder 15 connected to two reciprocating linear punches 15a for pushing the molten glass into two beads; a scissor assembly 16 for cutting the glass beads into individual gobs; a plate (gob interceptor) 17 movable between a non-interference rest position, and an intercepting work position in which it directs the glass gobs to an unloading channel 18 away from the underlying members, e.g. for cleaning; and a distributor 19 rotating in a given sequence to direct each glass gob to a given section 3 underneath.

Each section 3 (not shown in detail in Figure 1) comprises a rough mold, which is movable between an open and a closed position, receives one glass gob at a time, and forms from each gob a blank of the glass article to be produced; an inverter assembly for gripping, rotating, and loading the blank into a finish mold, which is also movable between an open and a closed position, and in which the hollow glass article is completed; a take-out member for extracting the finished articles from the finish mold and transferring them onto a fixed platform; and a pusher 26 for transferring the finished articles to article take-away and inspection assembly 5.

Article take-away and inspection assembly 5 is defined by a conveyor belt 30 extending from the frame of line 2 to a collecting unit 32. Various article inspection units, such as load cells (not shown) for weighing the articles, and a laser assembly 33 for checking the position and size of the articles are located along the conveyor. In particular, a rejection member 31 is located along conveyor belt 30 to remove any articles not passing inspection.

Line 2 is provided with pushbutton panels 35 (one for each section 3, only one of which is shown schematically for the sake of simplicity) having a plurality of pushbuttons 36 and indicator lights 37 relating to particular operating steps of line 2. Pushbuttons 36 are technician-operated, e.g. to shut down line 2 in the event of an emergency, and each correspond to a respective indicator light 37.

The above members (feeder 15, scissor assembly 16, plate 17, distributor 19, rough and finish molds, inverter assembly, take-out member, pusher 26, conveyor belt 30, and rejection member 31) are each controlled in known manner (not shown in detail) by a respective electric motor or pneumatic actuator in turn controlled by control system 10. Control system 10 also controls the information received from sensors along line 2 or the operator commands entered through pushbuttons 36, and turns on indicator lights 37.

Control system 10 is preferably divided, in known manner, into three separate machine systems: a drive system for controlling the electric motors of line 2; a timing system for controlling pneumatic article molding movements; and a service system for accessory controls. Each of the three machine systems therefore comprises a respective control unit. The invention relates to the timing system, as described in detail later on, so no description is given of the drive and service systems.

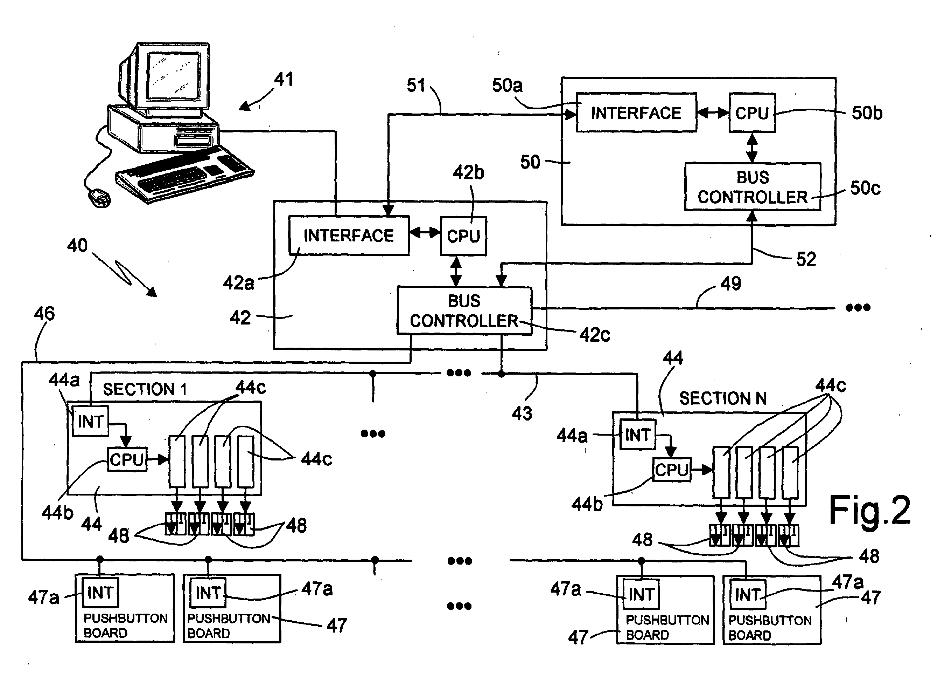

Figure 2 shows a block diagram of a timing system 40 in accordance with a first embodiment.

Timing system 40 comprises a line supervisor 41, e.g. an industrial PC with a user interface, for processing specific production plans and transmitting specific data relating to the process to be implemented to a machine controller 42.

Machine controller 42 - which determines and controls the exact activation instants of the members of line 2, and controls pushbuttons 36 and indicator lights 37 - comprises an interface 42a connected to line supervisor 41; a central processing unit 42b; and a bus controller 42c.

Bus controller 42c is an intelligent, two-channel type (e.g. a Janz CAN104/K20 controller or similar) connected over a main serial bus 43 to a plurality of section driving boards 44, each relating to a respective section 3 and fitted directly to line 2. More specifically, main serial bus 43 is a fast CANBUS technology type for real-time connection to section driving boards 44.

To this end, each section driving board 44 comprises an interface unit 44a; a processor 44b for controlling communications to/from main serial bus 43; and a plurality of power modules 44c which, depending on the control signals from machine controller 42, control the pneumatic actuators of respective section 3 - indicated schematically by 48 and, as shown, normally defined by proportional or on/off valves. Each processor 44b is connected to respective interface unit 44a, distinguishes the commands meant for its own section 3, and directs them to the appropriate power module 44c, which generates corresponding electric signals to drive actuators 48.

Bus controller 42c is also connected over an auxiliary serial bus 46 to a plurality of pushbutton boards 47, each relating to a pushbutton panel 35, e.g. relative to the finish mold and rough mold.

Auxiliary serial bus 46 is a slow CANBUS technology type, and each pushbutton board 47 comprises an interface 47a, e.g. a Can-Scux00 (Plug IN) interface.

Bus controller 42c is connected to the other systems (not shown) over a further slow CANBUS technology serial bus 49.

Timing system 40 conveniently comprises an auxiliary controller 50 implementing a redundancy or "hot" backup system. To this end, auxiliary controller 50 comprises an interface 50a connected to interface 42a of machine controller 42 over an Rs485-TCP/IP type line 51; a central processing unit 50b; and a bus controller 50c connected to bus controller 42c of machine controller 42 over a slow CANBUS technology serial bus 52.

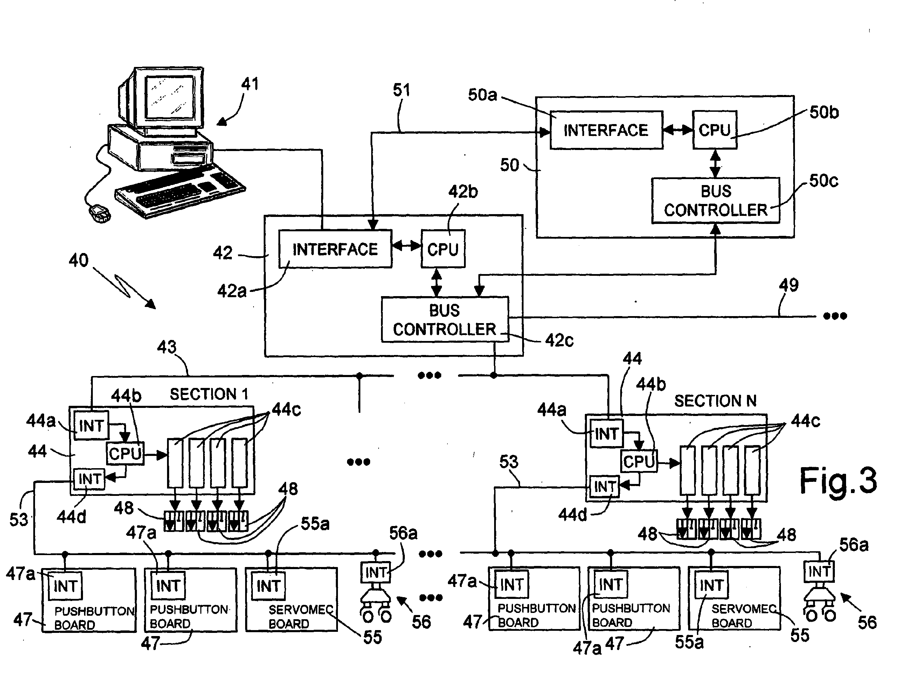

Figure 3 shows a variation of the architecture of the Figure 2 timing system 40, in which parts common to both Figures 2 and 3 are indicated using the same reference numbers with no further description.

In Figure 3, an auxiliary serial bus 53 is connected to section driving boards 44. To this end, each section driving board 44 comprises a second interface 44d connected to the respective processor 44b and to auxiliary serial bus 53, which is common to all of sections 3. Processor 44b distinguishes between the commands to be sent to power modules 44c and those to be sent to auxiliary serial bus 53, and directs them accordingly.

In addition to pushbutton boards 47, auxiliary serial bus 53 (again a slow CANBUS technology type) is also connected to further servomechanism control boards 55 (e.g. for opening/closing molds, turning over bottles, etc.) having respective interfaces 55a and pusher interfaces 56a (one for each section) connected to respective pushers 56.

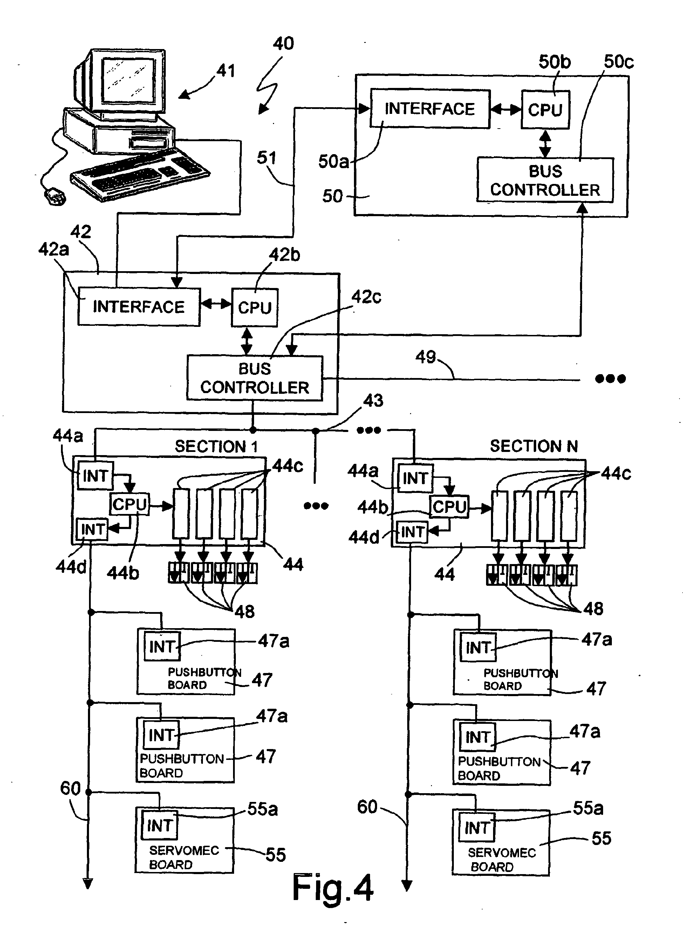

Figure 4 shows a further embodiment, in which each section driving board 44 is connected to a respective auxiliary serial bus 60 by a second interface 44d. Each auxiliary serial bus 60 (actually one for each section 3) is connected to respective pushbutton boards 47, to respective servomechanism control board 55, and to other section-controlled devices (e.g. pusher, servo-inverter, servo-take-out).

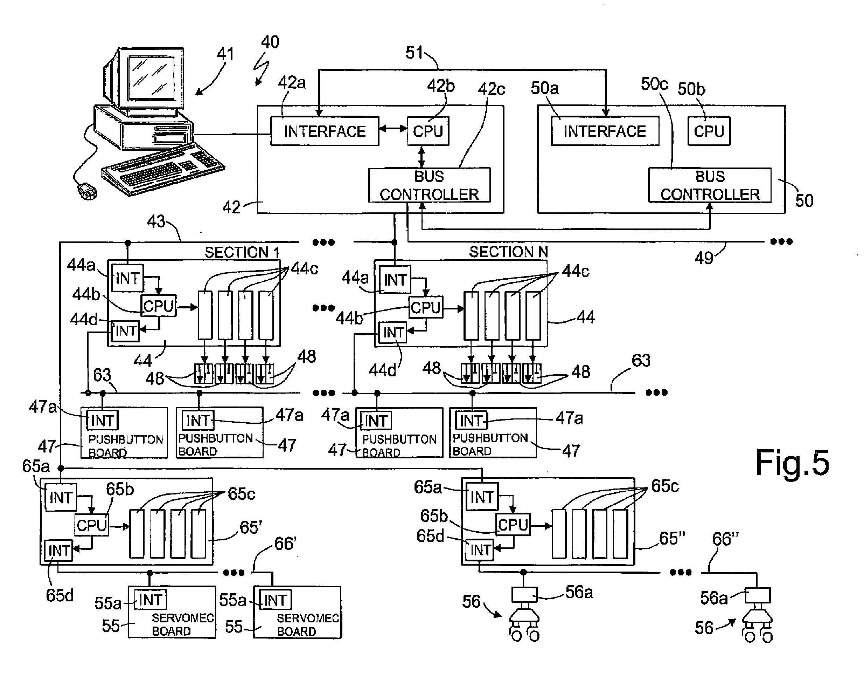

Figure 5 shows an embodiment in which a first auxiliary serial bus 63 is connected to all the section driving boards 44, as in Figure 3, but in this case is only connected to pushbutton boards 47. In Figure 5, main bus 43 is also connected to two pushbutton control boards 65', 65" (specifically for controlling servomechanisms and pushers) having the same structure as section driving boards 44, and therefore comprising a first interface 65a, a processor 65b, a plurality of power modules 65c (for controlling on/off or proportional solenoid valves - the slots housing power modules 65c may, however, house different devices, such as digital or analog input modules), and a second interface 65d. Each second interface 65d of pushbutton control boards 65', 65" is connected to a respective second auxiliary bus 66', 66"; second auxiliary bus 66' is connected to servomechanism control boards 55; and second auxiliary bus 66" is connected to pusher interfaces 56a.

In all the embodiments described, control of intelligent control operations is concentrated at machine controller 42 level, the lower-level processing units (processors 44b, 65b) simply discriminating between the information for controlling the relative power modules, or for the boards connected to them by an auxiliary bus.

The total number of components required is thus reduced. In fact, each section 3 requires only one board for controlling all the relative valves. Moreover, section driving boards 44 may be located at sections 3 themselves, thus reducing the number and total length of the cables required, by eliminating the need for intermediate intelligent control board cabinets. The structure is also simplified and made more reliable by the high degree of reliability of the electronics (machine controller 42) and buses employed, and by providing auxiliary controller 50 ready to cut in the event of a fault on machine controller 42.

Clearly, changes may be made to the timing control system as described and illustrated herein without, however, departing from the scope of the present invention.

## Claims

1. A hollow glassware production system (1) comprising a line (2) and a timing control system (40), the line (2) including a plurality of sections (3), each having a plurality of actuators (48),
**characterized in that** the timing control system (40) incudes:
- a line supervisor (41) for processing production plans;
- a machine controller (42) connected with said line supervisor, from which it receives specific data relating to the process to be implemented, the machine controller (42) determining and controlling the exact activation instants of the actuators (48);
- a plurality of section driving boards (44), each relating to a respective section and comprising a plurality of power modules (44c) controlling said actuators (48) based on the control signals from the machine controller, the section driving boards receiving and distinguishing the control signals for their own section and directing them to the appropriate power modules (44c); and
- a main serial bus (43) interposed between said machine controller (42) and said section driving boards (44) for real-time control.

2. A hollow glassware production system as claimed in Claim 1,
**characterized in that** said main serial bus (43) is a CANBUS technology type.

3. A hollow glassware production system as claimed in Claim 1 or 2, **characterized by** one section driving board (44) for each section (3) of said line (2).

4. A hollow glassware production system as claimed in any one of Claims 1 to 3, **characterized in that** each section driving board (44) further comprises a first interface (44a) connected to said main serial bus (43) and a discriminating processor (44b) for controlling communications with said main serial bus (43).

5. A hollow glassware production system as claimed in any one of Claims 1 to 4, **characterized in that** the timing control system (40) further includes a plurality of pushbutton panels (35); a plurality of pushbutton boards (47) for controlling pushbuttons and indicator lights; and an auxiliary serial bus (46) connected between said machine controller (42) and said pushbutton boards (47) (Figure 2).

6. A hollow glassware production system as claimed in any one of Claims 1 to 4, **characterized in that** the timing control system (40) further includes a plurality of pushbuttons (36) and indicator lights (37); a plurality of pushbutton boards (47) for controlling said pushbuttons and indicator lights; and an auxiliary serial bus (53) connected between said section driving boards (44) and said pushbutton boards (47) (Figure 3).

7. A hollow glassware production system as claimed in Claim 6, **characterized in that** said section driving boards (44) each comprise a second interface (44d) connected to said auxiliary serial bus (53).

8. A hollow glassware production system as claimed in Claim 6 or 7, **characterized in that** the timing control system (40) further includes servomechanism control boards (55) and pusher control interfaces (56a) connected to said auxiliary serial bus (53).

9. A hollow glassware production system as claimed in any one of Claims 1 to 4, **characterized in that** the timing control system (40) further includes a plurality of pushbutton panels (35); a plurality of pushbutton boards (47) for controlling pushbuttons and indicator lights; and a plurality of auxiliary serial buses (60), each connected between a respective section driving board (44) and a respective group of pushbutton boards (47) (Figure 4).

10. A hollow glassware production system as claimed in Claim 9, **characterized in that** the timing control system (40) further includes servomechanism control boards (55) connected to said auxiliary serial buses (60).

11. A hollow glassware production system as claimed in Claim 6 or 7, **characterized in that** the timing control system (40) further includes a servomechanism control board (65') and a pusher control board (65"), both connected to said main serial bus (43); said pusher control board (65") also being connected to servomechanism control boards (55) for all the sections (3) of said line (2); and said pusher control board (65") also being connected to pusher control interfaces (56a) for all the sections (3) of said line (2) (Figure 5).

12. A hollow glassware production system as claimed in Claims 5, 6, 9 and 11, **characterized in that** said auxiliary serial buses (46; 53; 60; 63) are CANBUS technology types.

13. A hollow glassware production system as claimed in any one of the foregoing Claims, c**haracterized in that** the timing control system (40) further includes a "hot" backup auxiliary controller (50) connected to said machine controller (42).

14. A hollow glassware production system as claimed in any one of the foregoing Claims, **characterized in that** said section driving boards (44) are located on said line (2).

## Patentansprüche

1. Hohlglasproduktionsanlage (1) mit einer Produktionslinie (2) und mit einem Zeitsteuersystem (40), wobei die Produktionslinie (2) eine Anzahl von Abschnitten (3) aufweist, bei denen jeder über eine Anzahl von Betätigungsmittel (48) verfügt, **dadurch gekennzeichnet, dass** das Zeitsteuersystem (40)
- eine Produktionslinienüberwachungseinheit (41) zum Verarbeiten von Produktionsplänen,
- eine Maschinensteuereinheit (42), die mit der Produktionslinienüberwachungseinheit verbunden ist, von der sie die für den zu implementierenden prozessspezifischen Daten verhält, wobei die Maschinensteuereinheit (42) die genauen Aktivierungszeitpunkte der Betätigungsmittel (48) bestimmt und steuert,
- eine Anzahl von Abschnittsantriebskarten (44), von denen jede einem bestimmten Abschnitt zugeordnet ist und über eine Anzahl von Energieversorgungsmodulen (44c) verfügt, die auf der Grundlage von Steuersignalen aus der Maschinensteuereinheit die Betätigungsmittel (48) ansteuern, wobei die Abschnittsantriebskarten die Steuersignale für ihren eigenen Abschnitt aufnehmen und zu den jeweils zugehörigen Energieversorgungsmodulen (44c) weiterleiten und
- einen seriellen Hauptbus (43) aufweist, der für eine Echtzeitsteuerung zwischen der Maschinensteuereinheit (42) und den Abschnittsantriebskarten (44) zwischengeschaltet ist.

2. Hohlglasproduktionsanlage gemäß Anspruch 1, **dadurch gekennzeichnet, dass** der serielle Hauptbus (43) entsprechend der CANBUS-Technologie aufgebaut ist.

3. Hohlglasproduktionsanlage gemäß Anspruch 1 oder 2, **gekennzeichnet durch** eine Abschnittsantriebskarte (44) für jeden Abschnitt (3) der Produktionslinie (2).

4. Hohlglasproduktionsanlage nach einem der Ansprüche 1 bis 3, **dadurch gekennzeichnet, dass** jede Abschnittsantriebskarte (44) weiterhin eine mit dem seriellen Hauptbus (43) verbundene erste Schnittstelle (44a) und einen diskriminierenden Prozessor (44b) zum Steuern der Datenverbindungen mit dem seriellen Hauptbus (43) aufweist.

5. Hohlglasproduktionsanlage nach einem der Ansprüche 1 bis 4, **dadurch gekennzeichnet, dass** das Zeitsteuersystem (40) weiterhin eine Anzahl von Druckelementenbedienfelder (35), eine Anzahl von Druckelementenkarten (47) zum Steuern von Druckelementen und Anzeigelichtern sowie einen seriellen Hilfsbus (46) aufweist, der zwischen die Maschinensteuereinheit (42) und die Druckelementenkarten (47) geschaltet ist (Fig. 2).

6. Hohlglasproduktionsanlage nach einem der Ansprüche 1 bis 4, **dadurch gekennzeichnet, dass** das Zeitsteuersystem (40) weiterhin eine Anzahl von Druckelementen (36) und Anzeigelichter (37), eine Anzahl von Druckelementenkarten (47) zum Steuern der Druckelemente und Anzeigelichter sowie einen seriellen Hilfsbus (53) aufweist, der zwischen die Abschnittsantriebskarten (44) und die Druckelementenkarten (47) geschaltet ist (Fig. 3).

7. Hohlglasproduktionsanlage nach Anspruch 6, **dadurch gekennzeichnet, dass** die Abschnittsantriebskarten (44) jeweils eine zweite Schnittstelle (44d) umfassen, die mit dem seriellen Hilfsbus (53) verbunden sind.

8. Hohlglasproduktionsanlage nach Anspruch 6 oder 7, **dadurch gekennzeichnet, dass** das Zeitsteuersystem (40) weiterhin Servomechanismussteuerkarten (55) und Drucksteuerschnittstellen (56a) aufweist, die mit dem seriellen Hilfsbus (53) verbunden sind.

9. Hohlglasproduktionsanlage nach einem der Ansprüche 1 bis 4, **dadurch gekennzeichnet, dass** das Zeitsteuersystem (40) weiterhin eine Anzahl von Druckelementenbedienfelder (35), eine Anzahl von Druckelementenkarten (47) zum Steuern von Druckelementen und Anzeigelichtern sowie eine Anzahl von seriellen Hilfsbussen (60) aufweist, die jeweils zwischen einer zugehörigen Abschnittsantriebskarte (44) und einer zugehörigen Gruppe von Druckelementenkarten (47) geschaltet sind (Fig. 4).

10. Hohlglasproduktionsanlage nach Anspruch 9, **dadurch gekennzeichnet, dass** das Zeitsteuersystem (40) weiterhin Servomechanismussteuerkarten (55) aufweist, die mit den seriellen Hilfsbussen (60) verbunden sind.

11. Hohlglasproduktionsanlage nach Anspruch 6 oder 7, **dadurch gekennzeichnet, dass** das Zeitsteuersystem (40) weiterhin eine Servomechanismussteuerkarte (65') und eine Drucksteuerkarte (65") aufweist, die beide mit dem seriellen Hauptbus (43) verbunden sind, wobei die Drucksteuerkarte (56") auch mit den Servomechanismuskarten (55) für alle Abschnitte (3) der Produktionslinie (2) verbunden sind und wobei die Drucksteuerkarte (65") auch mit den Drucksteuerschnittstellen (56a) für alle Abschnitte (3) der Produktionslinie (2) verbunden ist (Fig. 5).

12. Hohlglasproduktionsanlage nach Anspruch 5, 6, 9 und 11, **dadurch gekennzeichnet, dass** die seriellen Hilfsbusse (46, 53, 60, 63) gemäß der CANBUS-Technologie aufgebaut sind.

13. Hohlglasproduktionsanlage nach einem der vorangehenden Ansprüche, **dadurch gekennzeichnet, dass** das Zeitsteuersystem (40) weiterhin eine "Notfall" sicherungshilfssteuereinrichtung (50) aufweist, die mit der Maschinensteuereinheit (42) verbunden ist.

14. Hohlglasproduktionsanlage nach einem der vorangehenden Ansprüche, **dadurch gekennzeichnet, dass** die Abschnittsantriebskarten (44) an der Produktionslinie (2) angeordnet sind.

## Revendications

1. Système de production de verre creux (1) comprenant une ligne (2) et un système de commande de minutage (40), la ligne (2) comportant une pluralité de sections (3) qui comportent chacune une pluralité d'actionneurs (48),
**caractérisé par le fait que** le système de commande de minutage (40) comporte :
- un superviseur de ligne (41) pour le traitement de plans de production,
- un régisseur de machine (42) relié au superviseur de ligne, d'où il reçoit des données particulières relatives au processus à exécuter, le régisseur de machine (42) déterminant et commandant les instants exacts d'activation des actionneurs (48),
- une pluralité de tableaux de pilotage de section (44), chacun étant relatif à une section respective et comprenant une pluralité de modules de puissance (44c) commandant lesdits actionneurs (48) d'après les signaux de commande émis par le régisseur de machine, les tableaux de pilotage de section recevant et distinguant les signaux de commande pour leur propre section et les envoyant aux modules de puissance (44c) appropriés, et
- un bus série principal (43) interposé entre ledit régisseur de machine (42) et lesdits tableaux de pilotage de section (44) pour la commande en temps réel.

2. Système de production de verre creux selon la revendication 1, **caractérisé par le fait que** le bus série principal (43) est du type bus CAN (Controller Area Network).

3. Système de production de verre creux selon l'une des revendications 1 ou 2, **caractérisé par** un tableau de pilotage de section (44) pour chaque section (3) de la ligne (2).

4. Système de production de verre creux selon l'une des revendications 1 à 3, **caractérisé par le fait que** chaque tableau de pilotage de section (44) comprend en outre une première interface (44a) reliée audit bus série principal (43) et un processeur discriminateur (44b) pour commander les communications avec le bus série principal (43).

5. Système de production de verre creux selon l'une des revendications 1 à 4, **caractérisé par le fait que** le système de commande de minutage (40) comporte en outre une pluralité de panneaux de boutons-poussoirs (35), une pluralité de tableaux de boutons-poussoirs (47) pour commander les boutons-poussoirs et des voyants lumineux, et un bus série auxiliaire (46) monté entre ledit régisseur de machine (42) et lesdits tableaux de boutons-poussoirs (47) (figure 2).

6. Système de production de verre creux selon l'une des revendications 1 à 4, **caractérisé par le fait que** le système de commande de minutage (40) comporte en outre une pluralité de boutons-poussoirs (36) et de voyants lumineux (37), une pluralité de tableaux de boutons-poussoirs (47) pour commander les boutons-poussoirs et les voyants lumineux, et un bus série auxiliaire (53) monté entre lesdits tableaux de pilotage de section (44) et lesdits tableaux de boutons-poussoirs (47) (figure 3).

7. Système de production de verre creux selon la revendication 6, **caractérisé par le fait que** les tableaux de pilotage de section (44) comprennent chacun une deuxième interface (44d) reliée audit bus série auxiliaire (53).

8. Système de production de verre creux selon l'une des revendications 6 ou 7, **caractérisé par le fait que** le système de commande de minutage (40) comporte en outre des tableaux de commande de servomécanismes (55) et des interfaces de commande de pousseur (56a) reliés audit bus série auxiliaire (53).

9. Système de production de verre creux selon l'une des revendications 1 à 4, **caractérisé par le fait que** le système de commande de minutage (40) comporte en outre une pluralité de panneaux de boutons-poussoirs (35), une pluralité de tableaux de boutons-poussoirs (47) pour commander les boutons-poussoirs et les voyants lumineux, et une pluralité de bus série auxiliaires (60) montés chacun entre un tableau de pilotage de section (44) respectif et un groupe respectif de tableaux de boutons-poussoirs (47) (figure 4).

10. Système de production de verre creux selon la revendication 9, **caractérisé par le fait que** le système de commande de minutage (40) comporte en outre des tableaux de commande de servomécanismes (55) reliés auxdits bus série auxiliaires (60).

11. Système de production de verre creux selon l'une des revendications 6 ou 7, **caractérisé par le fait que** le système de commande de minutage (40) comporte en outre un tableau de commande de servomécanismes (65') et un tableau de commande de poussoirs (65") reliés tous les deux audit bus série principal (43), le tableau de commande de poussoirs (65") étant aussi relié aux tableaux de commande de servomécanismes (55) pour toutes les sections (3) de ladite ligne (2), et ledit tableau de commande de poussoirs (65") étant aussi relié à des interfaces de commande de poussoirs (56a) pour toutes les sections (3) de ladite ligne (2) (figure 5).

12. Système de production de verre creux selon les revendications 5, 6, 9 et 11, **caractérisé par le fait que** les bus série auxiliaires (46 ; 53 ; 60 ; 63) sont du type bus CAN (Controller Area Network).

13. Système de production de verre creux selon l'une des revendications précédentes, **caractérisé par le fait que** le système de commande de minutage (40) comporte en outre un régisseur auxiliaire de sauvegarde «dynamique» (50) relié audit régisseur de machine (42).

14. Système de production de verre creux selon l'une des revendications précédentes, **caractérisé par le fait que** lesdits tableaux de pilotage de section (44) sont situés sur ladite ligne (2).
